# FASCICULE DE BREVET EUROPEEN

(11) **EP 1 138 963 B1**
(45) Date de publication et mention de la délivrance du brevet: **02.11.2005**
(21) Numéro de dépôt: 01107104.0
(22) Date de dépôt: 22.03.2001
(51) Int. Cl.: F16C 1/26

(54) **Dispositif de maintien d'une gaine de commande à distance par câble**
Haltevorrichtung für eine Bowdenzughülle
Holding device for a cable control conduit

(30) Priorité: 31.03.2000 FR 0004150
(43) Date de publication de la demande: 04.10.2001
(73) Titulaire: VALEO CLIMATISATION, 78321 Le Mesnil St Denis Cedex (FR)
(72) Inventeur: Lacroix, Louis Jean-Michel, 94500 Champigny S/Marne (FR)
(74) Mandataire: Lemaire, Marc

(56) Documents cités:
- DE-A- 4 010 992
- DE-U- 29 705 650
- FR-A- 2 429 922
- US-A- 4 452 097
- US-A- 4 478 381
- US-A- 5 590 567

## Description

L'invention se rapporte aux commandes mécaniques à distance par câble, en particulier pour les équipements de véhicules automobiles. Le document US-A-4 452 097 décrit une attache pour un embout.

Elle concerne un dispositif de maintien d'une gaine de commande mécanique à distance par câble, dans lequel la gaine est munie d'un embout d'extrémité qui est propre à être maintenu sur un support.

Une commande à distance de ce type comprend habituellement une gaine traversée par un câble qui est déplaçable dans la gaine en direction axiale. Le câble possède deux extrémités qui sont assujetties respectivement à un actionneur et à un organe mobile.

Dans une application préférentielle de l'invention, l'actionneur est un organe rotatif d'un tableau de commande, tandis que l'organe mobile est un volet faisant partie d'une installation de chauffage et/ou climatisation d'un véhicule automobile.

En pareil cas, la gaine est munie, à l'une au moins de ses extrémités, d'un embout d'extrémité qui est destiné à être assujetti à un support, par exemple à un boîtier de commande. Il est possible aussi que cet embout d'extrémité se trouve du côté de l'organe mobile.

L'embout d'extrémité est généralement obtenu par surmoulage sur la gaine et est prévu pour être assujetti au support de sorte que l'extrémité correspondante de la gaine soit immobilisée dans une position prédéfinie.

Dans les dispositifs connus de ce type, la gaine est maintenue sur le support par l'intermédiaire d'une pièce supplémentaire telle qu'une vis, une agrafe, etc.

Ces solutions connues nécessitent par conséquent la mise en place d'une pièce supplémentaire exigeant souvent des efforts importants, difficiles à mettre en oeuvre, en particulier sur les chaînes de montage automatique.

En outre, la mise en place de cette pièce supplémentaire nécessite généralement un outillage particulier, ce qui augmente les temps de montage.

Par ailleurs, dans les solutions de l'art antérieur, la fixation de la gaine la maintient de façon rigide sur le support. Cela engendre des difficultés de montage avec des contrainte de mise en place au niveau de l'ensemble. Il peut effectivement se produire des torsions au niveau de la gaine qui rendent plus délicates la commande par câble.

L'invention a notamment pour but de surmonter les inconvénients précités.

Elle vise en particulier à procurer un dispositif qui permet de maintenir une telle gaine de commande par des moyens de fixation rapide, qui ne nécessitent ni pièce supplémentaire, ni outillage particulier, et qui en outre ne risquent pas d'engendrer des torsions de la gaine.

L'invention propose à cet effet un dispositif de maintien du type défini précédemment, lequel comprend une attache venue de moulage avec le support et constituée d'une embase issue du support pour délimiter un logement de réception de l'embout et d'un couvercle relié à l'embase par une charnière-film, en sorte que ce couvercle est propre à pivoter entre une position d'ouverture pour l'introduction de l'embout et une position de verrouillage pour emprisonner l'embout, et dans lequel, dans la position de verrouillage du couvercle, l'embout d'extrémité est maintenu dans le logement en étant immobilisé axialement et libre en rotation.

Ainsi, l'invention procure une attache réalisée d'une seule pièce avec le support et comprenant essentiellement une embase issue du support et un couvercle susceptible de pivoter par l'intermédiaire d'une charnière-film.

Cette charnière permet de pouvoir laisser la gaine se positionner au montage en tournant sur elle-même du fait que l'embout d'extrémité et la gaine sont libres en rotation.

Cet aspect de libre rotation est très important car, une fois la gaine attachée à chacune des ses extrémités, elle va se positionner par rotation sur elle-même.

Une telle charnière est réalisée par un amincissement local de la matière entre l'embase et le couvercle, pour procurer une zone déformable. Il en résulte que le couvercle est propre à pivoter par rapport à l'embase, tout en étant monobloc avec cette dernière.

De la sorte, on procure une attache qui fait partie intégrante du support et qui est donc obtenue avec ce dernier lors du moulage, si bien que la gaine peut être maintenue sur le support sans qu'il soit nécessaire de faire appel à une pièce supplémentaire, ni à un outillage particulier.

Dans une forme de réalisation préférée de l'invention, le couvercle est propre à pivoter sur un intervalle angulaire d'environ 90° entre la position d'ouverture et la position de verrouillage.

Le dispositif de l'invention comprend avantageusement des moyens de verrouillage pour verrouiller le couvercle sur l'embase.

Dans une forme de réalisation préférée, ces moyens de verrouillage comprennent une languette solidaire du couvercle et propre à venir se loger dans une ouverture de l'embase dans la position de verrouillage.

Il est avantageux que le couvercle soit muni intérieurement d'une butée de retenue située proche de la charnière-film et propre à venir en appui derrière un rebord de butée formé à l'intérieur de l'embase, lorsque le couvercle est en position de fermeture.

Ceci procure une sécurité supplémentaire pour le cas où la charnière-film serait endommagée de façon accidentelle. En effet, l'embout d'extrémité de la gaine est maintenu dans l'attache même si la charnière-film vient à casser.

Selon une autre mode de réalisation avantageuse de l'invention, le couvercle comprend une paroi interne conformée propre à définir une partie d'un berceau de réception de l'embout.

En pareil cas, on prévoit avantageusement que l'embase définit une autre partie de ce berceau de réception.

Dans une forme de réalisation préférée de l'invention, l'embase comprend une première paroi à laquelle est reliée le couvercle et une deuxième paroi opposée à la première paroi et propre à coopérer avec le couvercle pour le verrouillage.

Avantageusement, cette deuxième paroi est susceptible de fléchir élastiquement lors du verrouillage du couvercle.

Dans cette forme de réalisation préférée, l'embase comprend en outre deux parois latérales espacées, disposées entre la première paroi et la deuxième paroi pour définir une structure quadrangulaire.

Ainsi, ces quatre parois définissent une sorte de cheminée procurant un logement pour l'embout du câble.

Les deux parois latérales précitées définissent avantageusement un espacement interne qui correspond à la longueur axiale de l'embout.

Ainsi, lorsque l'embout est placé dans le logement, les deux parois latérales forment des butées limitant le déplacement axial de l'embout.

L'embout peut affecter différentes formes. Il peut ainsi avoir une forme générale de révolution, en particulier une forme générale cylindrique, ou bien encore comporter un filetage externe.

Le support est formé avantageusement par moulage d'une matière thermoplastique, en particulier du type polyéthylène, polypropylène, ABS, etc.

L'attache de l'invention est définie de façon à répondre aux contraintes d'arrachement imposées par le constructeur. La nécessité de résister à l'arrachement est due au fait qu'en cas de désacouplement de l'attache de la gaine et de son support de fixation, il devient alors difficile de commander un organe mobile. Ceci est le cas notamment dans la commande des volets d'une installation de chauffage et/ou climatisation de véhicule automobile.

Dans une application préférentielle de l'invention, le support fait partie d'un boîtier de commande d'un équipement de véhicule automobile.

Dans la description qui suit, faite seulement à titre d'exemple, on se réfère aux dessins annexés, sur lesquels :
- la figure 1 représente une commande mécanique à distance par câble appliquée à la commande d'un équipement et comprenant une gaine maintenue par deux dispositifs de maintien selon l'invention ;
- la figure 2 est une vue en coupe d'un dispositif de maintien d'une gaine de commande à distance par câble, la gaine étant représentée avant introduction dans le dispositif ;
- la figure 3 est une vue de dessus correspondant à la figure 2 dans une phase ultérieure où le couvercle est en position d'ouverture ;
- la figure 4 est une vue en coupe selon la ligne IV-IV de la figure 3 ;
- la figure 5 est une vue en coupe selon la ligne V-V de la figure 4 ;
- la figure 6 est une vue analogue à la figure 4 dans une phase ultérieure, entre la position d'ouverture et une position de verrouillage du couvercle ;
- la figure 7 est une vue analogue à la figure 6 dans laquelle le couvercle est en position de verrouillage ;
- la figure 8 est une vue en coupe selon la ligne VIII-VIII de la figure 7 ;
- la figure 9 est une vue de côté correspondant à la figure 4 ; et
- les figures 10 à 13 sont des vues en coupe analogues à la figure 5 et correspondant à des embouts de formes différentes.

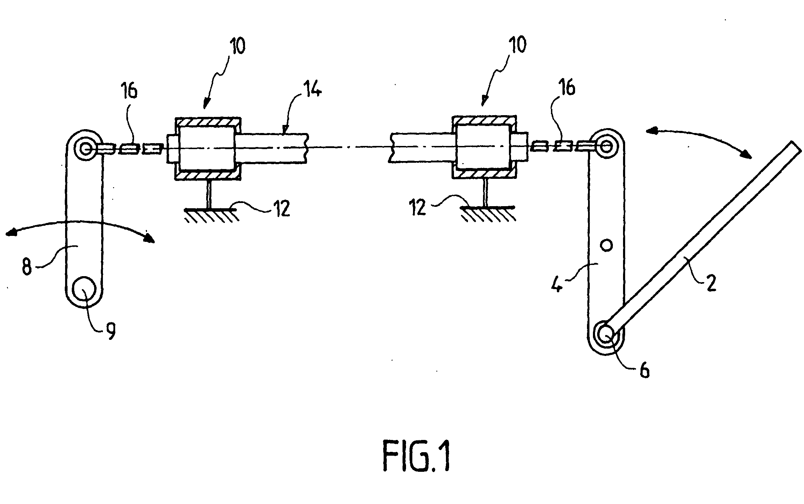

On se réfère d'abord à la figure 1 qui montre une commande mécanique à distance par câble appliquée à la commande d'un équipement, dans l'exemple un volet 2, qui est solidaire en rotation d'un levier 4 monté pivotant autour d'un axe 6. Le levier 4 est commandé en rotation à partir d'un actionneur 8, tel qu'un organe rotatif de commande, monté rotatif autour d'un axe 9 et porté par un boîtier de commande (non représenté).

Dans une application préférentielle de l'invention, ce boîtier de commande est logé dans une planche de bord d'un véhicule automobile et le volet 2 est prévu pour la gestion d'un flux d'air dans une installation de chauffage et/ou de climatisation de l'habitacle du véhicule.

La commande mécanique de la figure 1 comprend une gaine 14 traversée par un câble de commande 16, habituellement un câble mono-brin ou multi-brins réalisé en acier, et cette gaine est maintenue par deux dispositifs de maintien 10, encore appelés attaches, selon l'invention.

Le câble comprend une première extrémité 11 formant embout et assujettie à l'actionneur 8 et une seconde extrémité 13 formant embout et assujettie au volet 2.

La gaine 16 est maintenue au voisinage de ses extrémités par deux dispositifs de maintien 10 sensiblement identiques prévus sur le véhicule, c'est à dire respectivement sur le boîtier de commande et sur l'installation de chauffage et/ou climatisation.

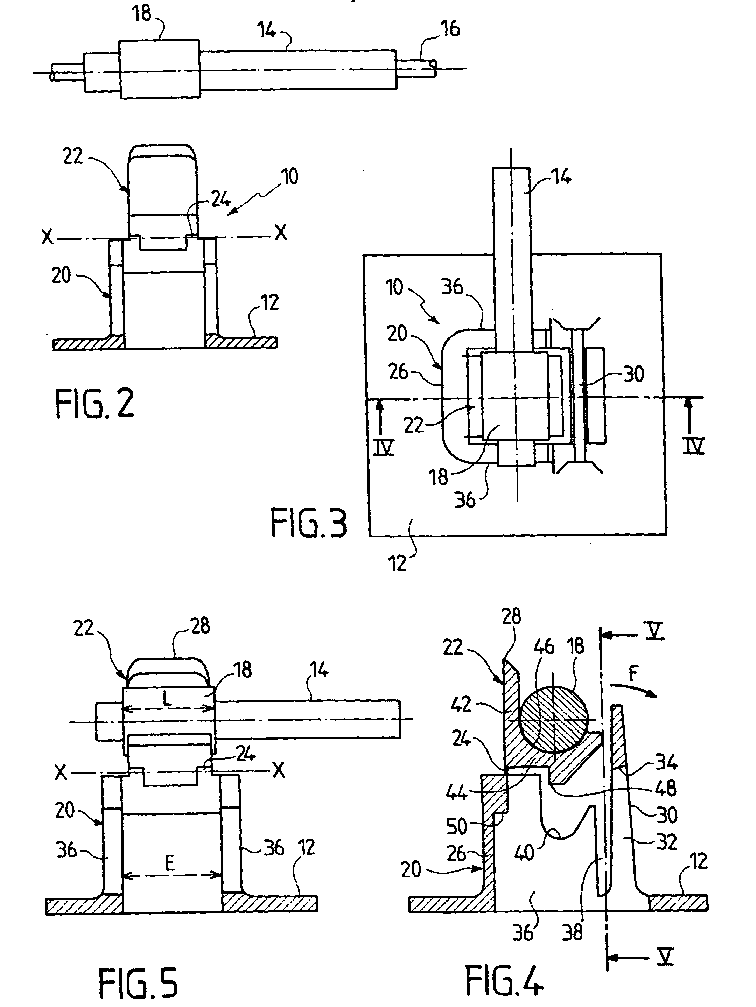

On se réfère maintenant à la figure 2 qui montre un des deux dispositifs de maintien précité. Ce dispositif comprend une attache 10 venue de moulage avec un support 12 (représenté partiellement) constituée par exemple d'un boîtier, tel que le boîtier de commande précité.

La gaine 14 comporte un embout 18, dans l'exemple de forme générale cylindrique circulaire, qui est surmoulé extérieurement et qui est prévu pour coopérer avec l'attache 10. L'attache 10 est destinée à maintenir cette gaine dans une position déterminée par rapport au support 12 de manière à l'immobiliser axialement, tout en la laissant en libre rotation. Cette attache 10 est venue de moulage avec le support 12, l'ensemble étant réalisé dans une matière plastique appropriée, généralement une matière thermoplastique, en particulier du type polyéthylène, polypropylène, ABS, etc.

L'attache 10 est constituée essentiellement d'une embase 20 issue du support et d'un couvercle 22 relié à l'embase par une charnière-film 24 en sorte que le couvercle peut pivoter par rapport à l'embase autour d'une articulation d'axe X-X.

Il est connu, dans la technique des matières plastiques, de réaliser ce que l'on appelle une "charnière-film" par un amincissement localisé de la matière plastique pour procurer une zone de déformation entre deux éléments faisant partie d'une même pièce et qui restent ainsi solidaires l'un de l'autre.

Généralement, on réalise une zone d'amincissement dont l'épaisseur est comprise, par exemple, entre 1/10 et 2/10 mm d'épaisseur.

Comme on le verra plus loin, le couvercle est propre à pivoter par rapport à l'embase entre une position d'ouverture comme représenté à la figure 2 pour permettre l'introduction de l'embout entre l'embase et le couvercle, et une position de fermeture ou de verrouillage dans laquelle le couvercle est rabattu en direction de l'embase pour définir conjointement un logement, de forme adaptée à celle de l'embout, pour maintenir ce dernier emprisonné, c'est à dire immobilisé axialement et libre en rotation.

On se réfère maintenant aux figures 3 à 5 qui montrent différentes vues du dispositif de l'invention, dans lesquelles le couvercle est en position d'ouverture et la gaine est appliquée contre l'intérieur du couvercle. Comme on peut le voir sur ces figures, l'embase 20 a une structure de forme générale quadrangulaire définissant une sorte de "cheminée".

L'embase 20 comprend une première paroi 26 qui s'érige à partir du support 12 et à laquelle est relié le couvercle 22 par la charnière-film 24. Le couvercle 26 comporte, à l'opposé de la charnière-film 24, une languette 28 en forme de chanfrein, dont la fonction sera expliquée plus loin.

L'embase 20 comprend en outre une deuxième paroi 30 opposée à la première paroi 26 et s'étendant sensiblement parallèlement à celle-ci. Cette deuxième paroi s'érige également à partir du support 12 mais sur une hauteur supérieure à celle de la paroi 26.

La paroi 30 est évidée de manière à définir une ouverture ou fente interne 32 délimitée notamment par un rebord 34 destiné à coopérer avec la languette 28 pour former conjointement des moyens de verrouillage du couvercle par rapport à l'embase, comme on le verra plus loin.

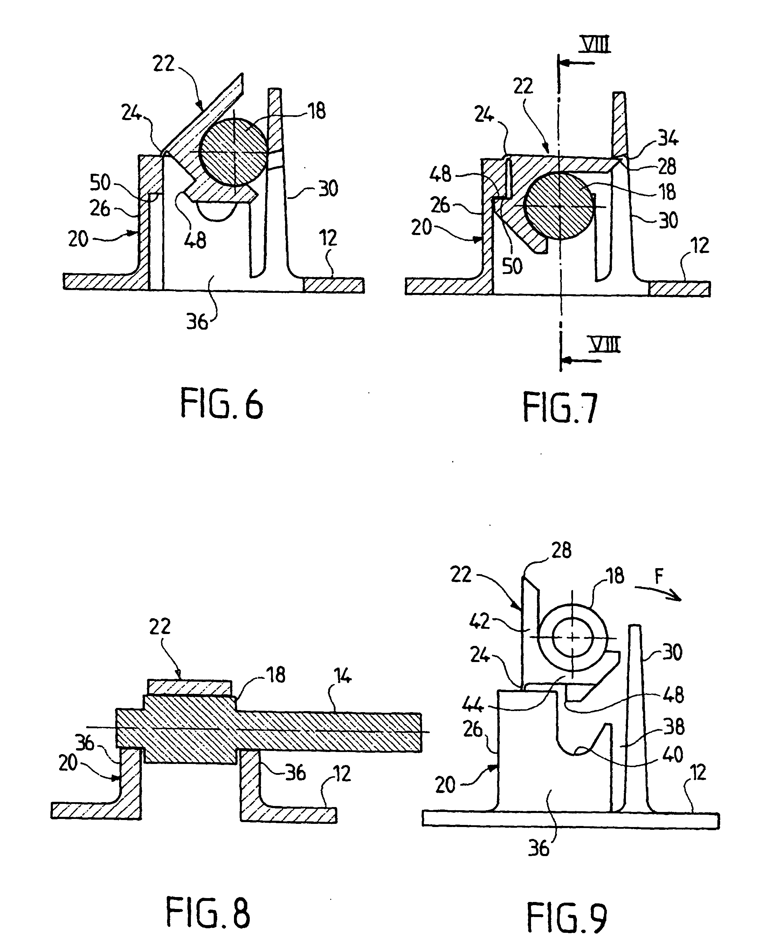

La paroi 30 est susceptible de fléchir par rapport au support 12 de manière à s'éloigner de la paroi 26 dans la direction de la flèche F (figures 4 et 9), comme on le verra plus loin.

L'embase 20 comprend en outre deux parois latérales espacées 36 qui sont disposées chacune entre la première paroi 26 et la deuxième paroi 30 pour définir la structure quadrangulaire précitée.

Comme on peut le voir plus particulièrement sur les figures 3, 4 et 9, les parois 36 sont reliées chacune à la paroi 26 mais ne se rattachent pas à la paroi 30, pour lui permettre de fléchir. Pour cela, chacune des parois 36 comporte une fente longitudinale 38 qui permet de découpler la paroi 30 des parois latérales 36.

Les parois 36 sont disposées en vis à vis et ménagent entre elles un espacement E (figure 5) qui est sensiblement égal, par valeur supérieure, à la longueur axiale L de l'embout 18. Ceci permet de loger l'embout entre les deux parois 36 pour l'immobiliser dans la direction axiale, tout en le laissant libre en rotation, même après fermeture du couvercle 22.

Par ailleurs, comme on peut le voir plus particulièrement sur les figures 4 et 9, chacune des parois latérales 36 comporte un évidement 40 en forme de U pour la réception de la gaine 14, de part et d'autre de l'embout.

Ainsi, l'embase 26 contribue à définir un logement, encore appelé berceau, pour la réception de l'embout de la gaine.

Le couvercle 22 (figure 4) comprend une branche 42 qui constitue le couvercle proprement dit et qui est prolongée par la languette 28 et une branche 44 qui s'étend dans une direction générale perpendiculaire à la branche 42 vers l'intérieur.

Cette branche 44 est conformée pour définir d'un côté, et conjointement avec la branche 42, un logement 46 en forme de U pour la réception de l'embout (figures 4 et 9). Ainsi, dans cette position d'ouverture du couvercle, l'embout 18 peut être reçu dans cette paroi interne conformée 46, laquelle définit une partie d'un berceau de réception de l'embout.

Du côté opposé, la branche 44 définit une butée de retenue 48 dirigée vers l'intérieur et située proche de la charnière-film 24. Cette butée est propre à venir en appui derrière un rebord de butée 50 formé à l'intérieur de l'embase, du côté intérieur de la paroi 26. La butée 48 est propre à coopérer avec le rebord de butée 50 après pivotement du couvercle.

Dans la position des figures 3 à 5 et 9, le couvercle est en position d'ouverture, la branche 42 étant dressée verticalement dans un plan généralement parallèle à celui de la paroi 26. Dans cette position, l'embout 18 est reçu dans la paroi interne 46 du couvercle formant, au moins en partie, berceau de réception de l'embout.

Ensuite, on fait pivoter le couvercle 42 autour de l'articulation définie par la charnière-film 24 dans le sens horaire, comme montré par la flèche F sur les figures 4 et 9.

Le couvercle passe ainsi par une multiplicité de positions intermédiaires, dont l'une d'elle est représentée à la figure 6. Dans cette position intermédiaire, le couvercle a pivoté d'environ 45° par rapport à la position précédente. Il a emmené avec lui l'embout qui se trouve ainsi en partie emprisonné entre le couvercle 22 et la paroi 30.

Ensuite, on fait pivoter davantage le couvercle pour l'amener dans une position de fermeture, encore appelée position de verrouillage, telle que représentée aux figures 7 et 8.

Dans cette position, le couvercle a pivoté d'environ 90° par rapport à la position d'ouverture des figures 4 et 9. La languette 28, qui a une forme de chanfrein, a repoussé la paroi 30, laquelle a fléchi dans la direction de la flèche F. Ainsi, cette languette est parvenue sous le rebord 34 pour assurer un verrouillage du couvercle par rapport à l'embase, lorsque la paroi 30 est revenue dans sa position initiale du fait de son élasticité propre.

Dans la position des figures 7 et 8, l'embout 18 de la gaine est emprisonné dans le logement délimité par l'embase et le couvercle. Il est maintenu axialement entre les parois latérales 36 de l'embase et radialement par la paroi interne 46 du couvercle ainsi que par les évidements en U 40 des parois 36 qui entourent la gaine de part et d'autre de l'embout.

Ainsi, l'embout peut être facilement mis en place dans le couvercle, en position ouverte, puis immobilisé après pivotement du couvercle par rapport à l'embase, jusqu'à la position de verrouillage, tout en gardant la possibilité pour la gaine de tourner sur elle-même. Ainsi le dispositif de maintien de l'invention procure un pivot grâce auquel l'embout de la gaine et la gaine peuvent tourner librement en évitant tout risque de torsion de la gaine.

Dans la position de verrouillage de la figure 7, la butée 48 vient en coopération avec le rebord de butée 50 ce qui assure une sécurité. En effet, si la charnière-film était endommagée accidentellement, la butée et le rebord de butée coopéreraient entre eux pour empêcher le couvercle de se désolidariser de la paroi 26.

Normalement, une telle attache est prévue pour être actionnée lors d'un premier montage et éventuellement à l'occasion d'une réparation, si bien que la charnière-film n'est pas destinée à fonctionner plusieurs fois.

S'il est nécessaire de démonter l'embout, il suffit d'écarter la paroi 30 pour libérer la languette 28 et de faire pivoter le couvercle en sens inverse pour le ramener vers la position d'ouverture.

Dans la forme de réalisation décrite précédemment, l'embout a une forme générale cylindrique de révolution.

Cependant, il est concevable de lui donner d'autres formes, tout en lui conservant la possibilité de tourner sur lui-même.

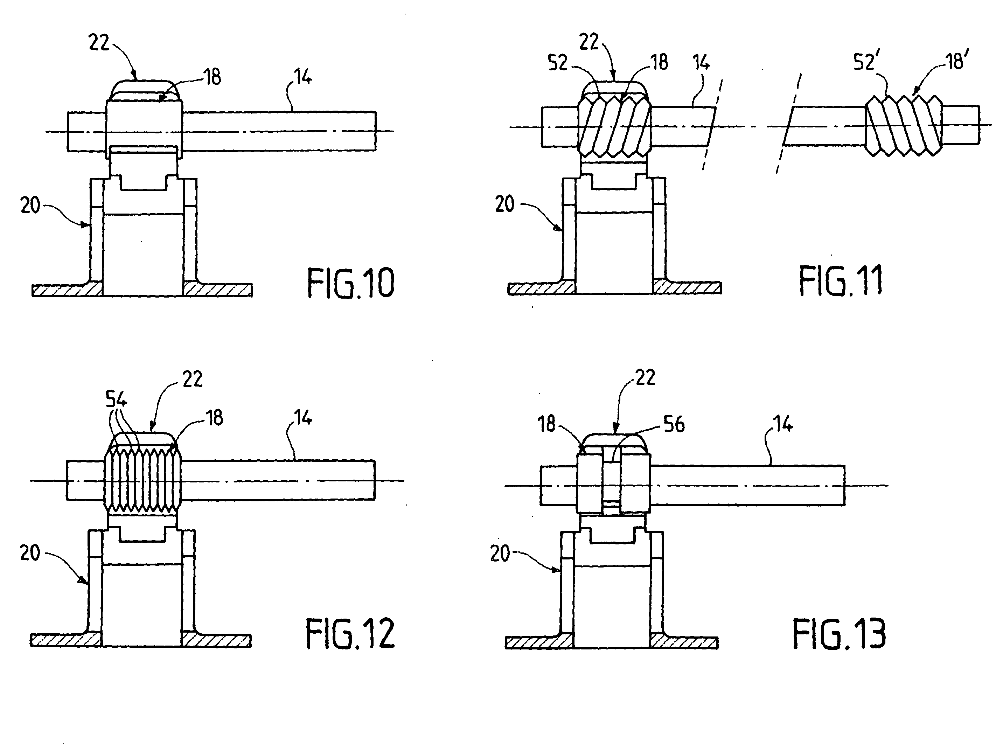

Dans la forme de réalisation de la figure 10, l'embout 18 est constitué par un cylindre simple.

Dans la forme de réalisation de la figure 11, l'embout 18 comporte un filetage externe 52 formant pas de vis. En pareil cas, il est possible de prévoir, à l'autre extrémité de la gaine un embout analogue 18' comportant un pas de vis 52', en sorte que les pas de vis 52 et 52' soient inversés.

Dans la forme de réalisation de la figure 12, l'embout 18 comporte des stries 54, ce qui permet de procurer un réglage.

Enfin, dans la forme de réalisation de la figure 13, l'embout 18 a une forme de révolution et il comprend une fente annulaire 56.

On comprendra qu'il est possible de maintenir la gaine avec au moins une attache 10, de préférence avec deux attaches 10, c'est à dire ici du côté du boîtier de commande et/ou du côté de l'installation.

L'invention trouve une application préférentielle aux commandes à distance par câble pour les équipements de véhicules automobiles.

## Revendications

1. Dispositif de maintien d'une gaine (14) de commande mécanique à distance par câble, ladite gaine étant munie d'un embout d'extrémité propre à être maintenue sur un support (12),
**caractérisé en ce qu'**il comprend une attache (10) venue de moulage avec le support (12) et constituée d'une embase (20) issue du support pour délimiter un logement de réception de l'embout et d'un couvercle (22) relié à l'embase par une charnière-film (24), de sorte que le couvercle (22) est propre à pivoter entre une position d'ouverture pour l'introduction de l'embout et une position de verrouillage pour emprisonner l'embout, et **en ce que**, dans la position de verrouillage du couvercle (22), l'embout d'extrémité est maintenu dans le logement en étant immobilisé axialement et libre en rotation.

2. Dispositif selon la revendication 1, **caractérisé en ce que** le couvercle (22) est propre à pivoter sur un intervalle angulaire d'environ 90° entre la position d'ouverture et la position de verrouillage.

3. Dispositif selon l'une des revendications 1 et 2, **caractérisé en ce qu'**il comprend des moyens de verrouillage (28, 34) pour verrouiller le couvercle (22) sur l'embase (20).

4. Dispositif selon la revendication 3, **caractérisé en ce que** les moyens de verrouillage comprennent une languette (28) solidaire du couvercle (22) et propre à venir se loger dans une ouverture (32) de l'embase (20) dans la position de verrouillage.

5. Dispositif selon l'une des revendications 1 à 4, **caractérisé en ce que** le couvercle (22) est muni intérieurement d'une butée de retenue (48) située proche de la charnière-film (24) et propre à venir en appui derrière un rebord de butée (50) formé à l'intérieur de l'embase (20), lorsque le couvercle est en position de verrouillage.

6. Dispositif selon l'une des revendications 1 à 5, **caractérisé en ce que** le couvercle (22) comprend une paroi interne conformée (46) propre à définir une partie d'un berceau de réception de l'embout.

7. Dispositif selon la revendication 6, **caractérisé en ce que** l'embase (20) définit une autre partie du berceau de réception de l'embout.

8. Dispositif selon l'une des revendications 1 à 7, **caractérisé en ce que** l'embase (20) comprend une première paroi (26) à laquelle est reliée le couvercle (22) et une deuxième paroi (30) opposée à la première paroi et propre à coopérer avec le couvercle pour le verrouillage.

9. Dispositif selon la revendication 8, **caractérisé en ce que** la deuxième paroi (30) est susceptible de fléchir élastiquement lors du verrouillage du couvercle.

10. Dispositif selon l'une des revendications 8 et 9, **caractérisé en ce que** l'embase (20) comprend en outre deux parois latérales (36) espacées et disposées entre la première paroi (26) et la deuxième paroi (36) pour définir une structure quadrangulaire.

11. Dispositif selon la revendication 10, **caractérisé en ce que** les deux parois latérales (36) de l'embase (20) définissent un espacement interne (E) qui correspond à la longueur axiale (L) de l'embout (18).

12. Dispositif selon l'une des revendications 1 à 11, **caractérisé en ce que** l'embout (18) a une forme générale de révolution, en particulier une forme générale cylindrique.

13. Dispositif selon l'une des revendications 1 à 11, **caractérisé en ce que** l'embout (18) comporte un filetage externe (52).

14. Dispositif selon l'une des revendications 1 à 13, **caractérisé en ce que** le support (12) est formé par moulage d'une matière thermoplastique.

15. Dispositif selon l'une des revendications 1 à 14, **caractérisé en ce que** le support (12) fait partie d'un boîtier de commande d'un équipement de véhicule automobile.

## Patentansprüche

1. Haltevorrichtung einer Hülle (14) für eine mechanische Fernsteuerung mittels Kabel, wobei die Hülle mit einem Endstück versehen ist, das dazu geeignet ist, auf einem Träger (12) gehalten zu werden, **dadurch gekennzeichnet, dass** eine Befestigung (10), die mit dem Träger (12) geformt ist und sich aus einer Grundplatte (20) zusammensetzt, die vom Träger hervorgeht, um eine Aufnahmelagerung des Endstücks und eines Deckels (22) abzugrenzen, der derart durch ein Film-Scharnier (24) mit der Grundplatte verbunden ist, dass der Deckel (22) dazu geeignet ist, zwischen einer Öffnungsposition für die Einführung des Endstücks und einer Verriegelungsposition zum Einschließen des Endstücks zu drehen, und **dadurch gekennzeichnet, dass** in der Verriegelungsposition des Deckels (22) das Endstück in der Lagerung gehalten wird, indem es axial blockiert ist und frei rotieren kann.

2. Vorrichtung nach Anspruch 1, **dadurch gekennzeichnet, dass** der Deckel (22) dazu geeignet ist, auf einem winkligen Intervall von etwa 90° zwischen der Öffnungsposition und der Verriegelungsposition zu drehen.

3. Vorrichtung nach einem der Ansprüche 1 und 2, **dadurch gekennzeichnet, dass** sie Verriegelungsmittel (28, 34) umfasst, um den Deckel (22) auf der Grundplatte (20) zu verriegeln.

4. Vorrichtung nach Anspruch 3, **dadurch gekennzeichnet, dass** die Verriegelungsmittel eine Zunge (28) umfassen, die untrennbar mit dem Deckel (22) verbunden ist und die dazu geeignet ist, sich in der Öffnung (32) von der Grundplatte (20) in der Verriegelungsposition zu lagern.

5. Vorrichtung nach einem der Ansprüche 1 bis 4, **dadurch gekennzeichnet, dass** der Deckel (22) im Inneren mit einem Halteanschlag (48) versehen ist, der sich beim Film-Scharnier (24) befindet und der dazu geeignet ist, sich hinter einer Anschlagkante (50) aufzustützen, die im Inneren der Grundplatte (20) gebildet ist, wenn sich der Deckel in der Verriegelungsposition befindet.

6. Vorrichtung nach einem der Ansprüche 1 bis 5, **dadurch gekennzeichnet, dass** der Deckel (22) eine angepasste innere Wand (46) umfasst, die dazu geeignet ist, einen Teil einer Aufnahmemulde des Endstücks zu definieren.

7. Vorrichtung nach Anspruch 6, **dadurch gekennzeichnet, dass** das Endstück (20) einen anderen Teil der Aufnahmemulde des Endstücks definiert.

8. Vorrichtung nach einem der Ansprüche 1 bis 7, **dadurch gekennzeichnet, dass** die Grundplatte (20) eine erste Wand (26) umfasst, mit der der Deckel (22) verbunden ist, und eine zweite Wand (30), die der ersten Wand gegenüberliegt und die dazu geeignet ist, mit dem Deckel für die Verriegelung zusammenzuwirken.

9. Vorrichtung nach Anspruch 8, **dadurch gekennzeichnet, dass** die zweite Wand (30) bei der Verriegelung des Deckels elastisch durchbiegen kann.

10. Vorrichtung nach einem der Ansprüche 8 und 9, **dadurch gekennzeichnet, dass** die Grundplatte (20) darüber hinaus zwei seitliche Wände (36) umfasst, die auseinander liegen und die zwischen der ersten Wand (26) und der zweiten Wand (36) angeordnet sind, um eine viereckige Struktur zu definieren.

11. Vorrichtung nach Anspruch 10, **dadurch gekennzeichnet, dass** die beiden seitlichen Wände (36) von der Grundplatte (20) einen internen Abstand (E) definieren, der der axialen Länge (L) des Endstücks (18) entspricht.

12. Vorrichtung nach einem der Ansprüche 1 bis 11, **dadurch gekennzeichnet, dass** das Endstück (18) eine allgemeine Rotationsform aufweist, insbesondere eine allgemeine zylindrische Form.

13. Vorrichtung nach einem der Ansprüche 1 bis 11, **dadurch gekennzeichnet, dass** das Endstück (18) ein externes Gewinde (52) umfasst.

14. Vorrichtung nach einem der Ansprüche 1 bis 13, **dadurch gekennzeichnet, dass** der Träger (12) durch Formgebung aus einem thermoplastischen Material geformt wird.

15. Vorrichtung nach einem der Ansprüche 1 bis 14, **dadurch gekennzeichnet, dass** der Träger (12) Bestandteil eines Gehäuses zur Steuerung einer Ausrüstung eines Automobils ist.

## Claims

1. Device for maintaining a casing (14) for cable operated remote control, said casing being fitted with a far end piece intended to be held on a support (12), **characterised in that** it comprises a fastener (10) moulded onto the support (12) and constituted of a mounting base (20) projecting from the support to delimit a housing for the end piece and a cover (22) connected to the end piece via a film hinge (24), so that the cover (22) can swivel between an open position in which the end piece can be inserted and a locked position in which the end piece is trapped, and **in that**, in the locked position of the cover (22), the far end piece is maintained in the housing whilst being axially immobilised and free in rotation.

2. Device set forth in claim 1, **characterised in that** the cover (22) is designed to swivel within an angular interval of about 90° between the open position and the locked position.

3. Device set forth in one of claims 1 and 2, **characterised in that** it comprises means for locking (28, 34) in order to lock the cover (22) onto the mounting base (20).

4. Device set forth in claim 3, **characterised in that** the means for locking comprises a tongue (28) integral with the cover (22) and intended to lodge itself into an opening (32) in the mounting base (20) in the locked position.

5. Device set forth in one of claims 1 to 4, **characterised in that** the cover (22) has a retention stop (48) on its inside in the vicinity of the film hinge (24) and designed to lean against and behind a stop lip (50) created on the inside of the mounting base (20) when the cover is in the locked position.

6. Device set forth in one of claims 1 to 5, **characterised in that** the cover (22) comprises a specially shaped internal wall (46) designed to define a part of a support cradle for the end piece.

7. Device set forth in claim 6, **characterised in that** the mounting base (20) defines another part of the support cradle for the end piece.

8. Device set forth in one of claims 1 to 7, **characterised in that** the mounting base (20) comprises a first wall (26) to which the cover (22) is connected and a second wall (30) opposite the first wall and designed to co-operate with the cover for locking.

9. Device set forth in claim 8, **characterised in that** the second wall (30) can deform elastically when the cover is locked.

10. Device set forth in one of claims 8 and 9, **characterised in that** the mounting base (20) further comprises two side walls (36) separated and located between the first wall (26) and the second wall (36) in order to define a quadrangular structure.

11. Device set forth in claim 10, **characterised in that** the two side walls (36) of the mounting base (20) define an inner space (E) which corresponds to the axial length (L) of the end piece (18).

12. Device set forth in one of claims 1 to 11, **characterised in that** the end piece (18) has an overall shape of revolution, in particular an overall cylindrical shape.

13. Device set forth in one of claims 1 to 11, **characterised in that** the end piece (18) comprises a male thread (52).

14. Device set forth in one of claims 1 to 13, **characterised in that** the support (12) is created by moulding a thermoplastic material.

15. Device set forth in one of claims 1 to 14, **characterised in that** the support (12) is part of a control box for motor vehicle equipment.
